# EUROPEAN PATENT APPLICATION

(11) **EP 4 852 557 A1**
(43) Date of publication of application: **09.12.2026**
(21) Application number: 24920929.7
(22) Date of filing: 31.01.2024
(51) Int. Cl.: H04W 72/044

(54) **RESOURCE CONFIGURATION METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2024/075093
(87) International publication number: WO 2025/160862

(57) **Abstract**

The present disclosure relates to a resource configuration method, a terminal, a network device, a communication system, and a storage medium. The resource configuration method comprises: a terminal receiving transmission configuration indicator (TCI) configuration information, wherein the TCI configuration information is used for configuring a TCI state, and the TCI state is used for indicating a reference signal resource identifier and port information corresponding to quasi-co-location (QCL). In the embodiments of the present disclosure, a reference signal resource identifier and port information that correspond to the QCL are indicated by means of a configured TCI state, such that a terminal configures reference signal resources having a plurality of ports, thereby reducing resource overheads during beam measurement.

## Description

### FIELD

The present disclosure relates to the field of communication technologies, and in particular, to a resource configuration method, a terminal, a network device, a communication system, and a storage medium.

### BACKGROUND

In multiple-input multiple-output (MIMO) for a sixth-generation mobile network (6G), a large-scale antenna array in a high-frequency band is introduced to provide higher spectral efficiency.

### SUMMARY

For a reference signal resource with multiple ports, resource configuration needs to be performed so as to reduce the resource overhead of a terminal during beam measurement.

The embodiments of the present disclosure provide a resource configuration method, a terminal, a network device, a communication system, and a storage medium.

In a first aspect of the embodiments of the present disclosure, a resource configuration method is provided, and the method includes: receiving, by a terminal, transmission configuration indicator (TCI) configuration information, in which the TCI configuration information is used to configure a TCI state, and the TCI state is used to indicate a reference signal resource identifier and port information corresponding to quasi-co-location (QCL).

In a second aspect of the embodiments of the present disclosure, a resource configuration method is provided, and the method includes: sending, by a network device, TCI configuration information, in which the TCI configuration information is used to configure a TCI state, and the TCI state is used to indicate a reference signal resource identifier and port information corresponding to QCL.

In a third aspect of the embodiments of the present disclosure, a resource configuration method is provided, and the method includes: transmitting, by a network device, TCI configuration information, in which the TCI configuration information is used to configure a TCI state, and the TCI state is used to indicate a reference signal resource identifier and port information corresponding to QCL; and receiving, by a terminal, the TCI configuration information.

In a fourth aspect of the embodiments of the present disclosure, a terminal is provided, includes: a transceiver module, configured to receive TCI configuration information, in which the TCI configuration information is used to configure a TCI state, and the TCI state is used to indicate a reference signal resource identifier and port information corresponding to QCL.

In a fifth aspect of the embodiments of the present disclosure, a network device is provided, includes: a transceiver module, configured to send TCI configuration information, in which the TCI configuration information is used to configure a TCI state, and the TCI state is used to indicate a reference signal resource identifier and port information corresponding to QCL.

In a sixth aspect of the embodiments of the present disclosure, a terminal is provided, includes: one or more processors; in which the terminal is configured to perform the resource configuration method in the first aspect and any one of the implementations of the first aspect.

In a seventh aspect of the embodiments of the present disclosure, a network device is provided, includes: one or more processors; in which the network device is configured to perform the resource configuration method in the second aspect and any one of the implementations of the second aspect.

In an eighth aspect of the embodiments of the present disclosure, a communication system is provided, includes a terminal and a network device, in which the terminal is configured to implement the resource configuration method in the first aspect and any one of the implementations of the first aspect, and the network device is configured to implement the resource configuration method in the second aspect and any one of the implementations of the second aspect.

In a ninth aspect of the embodiments of the present disclosure, a storage medium is provided, the storage medium stores instructions, when the instructions are executed on a communication device, the communication device performs the resource configuration method in the first aspect and any one of the implementations of the first aspect, or the second aspect and any one of the implementations of the second aspect.

In the embodiments of the present disclosure, the reference signal resource identifier and the port information corresponding to the QCL are indicated by using the configured TCI state, thereby reducing the resource overhead of the terminal in a process of performing beam measurement on the reference signal resource having multiple ports.

### BRIEF DESCRIPTION OF THE DRAWINGS

In order to describe the technical solutions in the embodiments of the present disclosure more clearly, the following briefly introduces the accompanying drawings required for describing the embodiments. The following accompanying drawings are merely some embodiments of the present disclosure, and do not constitute a specific limitation on the protection scope of the present disclosure.
FIG. 1A is a schematic architecture diagram of a communication system according to an embodiment of the present disclosure.
FIG. 1B is a schematic diagram of electromagnetic field division according to an embodiment of the present disclosure.
FIG. 1C is a schematic diagram of far-field beam propagation according to an embodiment of the present disclosure.
FIG. 1D is a schematic diagram of near-field beam propagation according to an embodiment of the present disclosure.
FIG. 2 is a schematic diagram of interaction of a resource configuration method according to an embodiment of the present disclosure.
FIG. 3A is a schematic flowchart of a resource configuration method according to an embodiment of the present disclosure.
FIG. 3B is a schematic flowchart of a resource configuration method according to an embodiment of the present disclosure.
FIG. 3C is a schematic flowchart of a resource configuration method according to an embodiment of the present disclosure.
FIG. 4A is a schematic flowchart of a resource configuration method according to an embodiment of the present disclosure.
FIG. 4B is a schematic flowchart of a resource configuration method according to an embodiment of the present disclosure.
FIG. 4C is a schematic flowchart of a resource configuration method according to an embodiment of the present disclosure.
FIG. 5 is a schematic diagram of interaction of a resource configuration method according to an embodiment of the present disclosure.
FIG. 6A is a schematic structural diagram of a terminal according to an embodiment of the present disclosure.
FIG. 6B is a schematic structural diagram of a network device according to an embodiment of the present disclosure.
FIG. 7A is a schematic structural diagram of a communication device according to an embodiment of the present disclosure.
FIG. 7B is a schematic structural diagram of a chip according to an embodiment of the present disclosure.

### DETAILED DESCRIPTION

The embodiments of the present disclosure provide a resource configuration method, a terminal, a network device, a communication system, and a storage medium.

In a first aspect, the embodiments of the present disclosure provide a resource configuration method, and the method includes: receiving, by a terminal, transmission configuration indicator (TCI) configuration information, the TCI configuration information is used to configure a TCI state, and the TCI state is used to indicate a reference signal resource identifier and port information corresponding to quasi-co-location (QCL).

In the foregoing embodiment, TCI state is used to indicate the reference signal resource identifier and the port information corresponding to the QCL, so that the terminal can determine, for a reference signal resource with multiple ports, the reference signal resource corresponding to the QCL.

With reference to some embodiments of the first aspect, in some embodiments, the terminal receives first configuration information, the first configuration information includes reference signal resource configuration information, the reference signal resource configuration information is used to configure a reference signal resource, and the reference signal resource corresponds to a plurality of ports; and the terminal sends a measurement report to a network device, the measurement report is obtained through measurement based on the reference signal resource, and the measurement report includes at least one of: the reference signal resource identifier and the port information; a quality parameter and the port information; or the reference signal resource identifier, a quality parameter, and the port information.

In the foregoing embodiment, the first configuration information is used to configure the reference signal resource with multiple ports, so that the terminal measures the reference signal resource and obtain a beam report, the network device can determine, according to the beam report, a port to be subsequently used for communication.

With reference to some embodiments of the first aspect, in some embodiments, the TCI state indicates the reference signal resource identifier and the port information as follows. The TCI state indicates a reference signal resource identifier corresponding to a first type of QCL and port information corresponding to the first type of QCL, the first type of QCL represents a spatial reception parameter.

In the foregoing embodiment, by reusing an existing type of QCL, the port information corresponding to the reference signal resource with multiple ports can be determined, and additional resource overhead caused by newly introducing a QCL can be avoided.

With reference to some embodiments of the first aspect, in some embodiments, the TCI state indicates the reference signal resource identifier and the port information as follows. The TCI state indicates a reference signal resource identifier corresponding to a first type of QCL and port information corresponding to a second type of QCL, the first type of QCL represents a spatial reception parameter, and the second type of QCL is different from the first type of QCL.

With reference to some embodiments of the first aspect, in some embodiments, the second type of QCL represents at least one of: a first distance; a port identifier; or a port group identifier.

In the foregoing embodiment, the network device can send a beam to a target terminal more accurately, thereby avoiding causing interference to a terminal in the same direction during beam sending.

With reference to some embodiments of the first aspect, in some embodiments, the port information includes: a port identifier, and/or a port group identifier, and in a case where the measurement report includes a port group identifier, the port group identifier has a correspondence relationship with the port identifier, the correspondence relationship is determined based on a default rule or based on second configuration information, and the second configuration information includes: the first configuration information, or configuration information other than the first configuration information.

With reference to some embodiments of the first aspect, in some embodiments, the correspondence relationship determined based on the default rule includes at least one of: each port group corresponding to a port group identifier includes N ports with consecutive port identifiers; each port group corresponding to a port group identifier includes N ports with equally spaced port identifiers; or port identifiers comprised in each of the port groups corresponding to the port group identifiers are determined based on a protocol, in which N is an integer greater than or equal to 2.

With reference to some embodiments of the first aspect, in some embodiments, the correspondence relationship determined based on the second configuration information includes at least one of: a number of ports included in each port group; or port identifiers of ports included in each port group.

With reference to some embodiments of the first aspect, in some embodiments, the measurement report includes at least one of: a non-group based beam measurement report; or a group based beam measurement report, wherein the group based beam measurement report comprises at least one beam group.

With reference to some embodiments of the first aspect, in some embodiments, the beam group satisfies at least one of: at least two reference signal resource identifiers in the beam group are different, and at least two port identifiers in the beam group are different; at least two reference signal resource identifiers in the beam group are different, and at least two port group identifiers in the beam group are different; at least two port identifiers in the beam group are different; or at least two port group identifiers in the beam group are different.

With reference to some embodiments of the first aspect, in some embodiments, the reference signal resource includes at least one of: a channel state information-reference signal (CSI-RS); or a synchronization signal block (SSB).

With reference to some embodiments of the first aspect, in some embodiments, the TCI configuration information includes at least one of: radio resource control (RRC); a medium access control-control element (MAC CE); or downlink control information (DCI).

With reference to some embodiments of the first aspect, in some embodiments, the first distance is determined based on the port information.

In a second aspect, a resource configuration method is provided, and the method includes: sending, by a network device, TCI configuration information, in which the TCI configuration information is used to configure a TCI state, and the TCI state is used to indicate a reference signal resource identifier and port information corresponding to QCL.

In the foregoing embodiment, the TCI state is used to indicate the reference signal resource identifier and the port information corresponding to the QCL, the terminal can determine, for a reference signal resource with multiple ports, the reference signal resource corresponding to the QCL.

With reference to some embodiments of the second aspect, in some embodiments, the method further includes: sending, by the network device, first configuration information, in which the first configuration information includes reference signal resource configuration information, the reference signal resource configuration information is used to configure a reference signal resource, and the reference signal resource corresponds to a plurality of ports; and the network device receives a measurement report sent by a terminal, the measurement report is obtained through measurement based on the reference signal resource, and the measurement report includes at least one of: the reference signal resource identifier and the port information; a quality parameter and the port information; or the reference signal resource identifier, a quality parameter, and the port information.

With reference to some embodiments of the second aspect, in some embodiments, the TCI state indicates the reference signal resource identifier and the port information as follows. The TCI state indicates a reference signal resource identifier corresponding to a first type of QCL and port information corresponding to a second type of QCL, the first type of QCL represents a spatial reception parameter, and the second type of QCL is different from the first type of QCL.

With reference to some embodiments of the second aspect, in some embodiments, the second type of QCL represents at least one of: a first distance; a port identifier; or a port group identifier.

With reference to some embodiments of the second aspect, in some embodiments, the port information includes: a port identifier, and/or a port group identifier, and in a case where the measurement report includes a port group identifier, the port group identifier has a correspondence relationship with the port identifier, the correspondence relationship is determined based on a default rule or based on second configuration information, and the second configuration information includes: the first configuration information, or configuration information other than the first configuration information.

With reference to some embodiments of the second aspect, in some embodiments, the correspondence relationship determined based on the default rule includes at least one of: each port group corresponding to a port group identifier includes N ports with consecutive port identifiers; each port group corresponding to a port group identifier includes N ports with equally spaced port identifiers; or port identifiers included in each of the port groups corresponding to the port group identifiers are determined based on a protocol, in which N is an integer greater than or equal to 2.

With reference to some embodiments of the second aspect, in some embodiments, the correspondence relationship determined based on the second configuration information includes at least one of: a number of ports included in each port group; or port identifiers of ports included in each port group.

With reference to some embodiments of the second aspect, in some embodiments, the measurement report includes at least one of: a non-group based beam measurement report; or a group based beam measurement report, the group based beam measurement report includes at least one beam group.

With reference to some embodiments of the second aspect, in some embodiments, the beam group satisfies at least one of: at least two reference signal resource identifiers in the beam group are different, and at least two port identifiers in the beam group are different; at least two reference signal resource identifiers in the beam group are different, and at least two port group identifiers in the beam group are different; at least two port identifiers in the beam group are different; or at least two port group identifiers in the beam group are different.

With reference to some embodiments of the second aspect, in some embodiments, the reference signal resource includes at least one of: CSI-RS; or SSB.

With reference to some embodiments of the second aspect, in some embodiments, the TCI configuration information includes at least one of: RRC; MAC CE; or DCI.

With reference to some embodiments of the second aspect, in some embodiments, the first distance is determined based on port information.

In a third aspect, a communication method is provided, and the method includes: transmitting, by a network device, TCI configuration information, in which the TCI configuration information is used to configure a TCI state, and the TCI state is used to indicate a reference signal resource identifier and port information corresponding to QCL; and receiving, by a terminal, the TCI configuration information.

In a fourth aspect, a terminal is provided, includes: a transceiver module, configured to receive TCI configuration information, the TCI configuration information is used to configure a TCI state, and the TCI state is used to indicate a reference signal resource identifier and port information corresponding to QCL.

In a fifth aspect, a network device is provided, includes a transceiver module, configured to send TCI configuration information. The TCI configuration information is used to configure a TCI state, and the TCI state is used to indicate a reference signal resource identifier and port information corresponding to QCL.

In a sixth aspect, a terminal is provided, includes one or more processors. The terminal is configured to perform the resource configuration method according to the first aspect and any one of the implementations of the first aspect.

In a seventh aspect, a network device is provided, includes one or more processors. The network device is configured to perform the resource configuration method according to the second aspect and any one of the implementations of the second aspect.

In an eighth aspect, a communication system is provided, includes a terminal and a network device, the terminal is configured to implement the resource configuration method according to the first aspect and any one of the implementations of the first aspect, and the network device is configured to implement the resource configuration method according to the second aspect and any one of the implementations of the second aspect.

In a ninth aspect, a storage medium is provided, the storage medium stores instructions, when the instructions are executed on a communication device, the communication device performs the resource configuration method according to the first aspect and any one of the implementations of the first aspect, or the second aspect and any one of the implementations of the second aspect.

In a tenth aspect, the embodiments of the present disclosure provide a program product, when the program product is executed by a communication device, the communication device performs the method described in the optional implementations of the first aspect or the second aspect.

In an eleventh aspect, the embodiments of the present disclosure provide a computer program, when the computer program is executed on a computer, the computer performs the method described in the optional implementations of the first aspect or the second aspect.

In a twelfth aspect, the embodiments of the present disclosure provide a chip or a chip system. The chip or the chip system includes a processing circuit configured to perform the method described in the optional implementations of the foregoing first aspect or second aspect.

It may be understood that the terminal, the access network device, the first network element, the other network elements, the core network device, the communication system, the storage medium, the program product, the computer program, the chip, or the chip system involved in the embodiments of the present disclosure are all used to perform the methods provided in the embodiments of the present disclosure. Therefore, for the beneficial effects that can be achieved thereby, reference may be made to the beneficial effects in the corresponding methods, and details are not repeated herein.

The embodiments of the present disclosure provide a communication method, an apparatus, a device, and a storage medium. In some embodiments, the communication method, the information processing method, the resource configuration method, and the like may be interchanged with one another; the communication apparatus, the information processing apparatus, the resource configuration apparatus, and the like may be interchanged with one another; and the information processing system, the communication system, and the like may be interchanged with one another.

The embodiments of the present disclosure are not exhaustive and are merely illustrative of some embodiments, and do not serve as a specific limitation on the protection scope of the present disclosure. Where there is no conflict, each step in a certain embodiment may be implemented as an independent embodiment, and the steps may be combined arbitrarily. For example, a solution obtained by removing some steps from a certain embodiment may also be implemented as an independent embodiment, and the order of the steps in a certain embodiment may be interchanged arbitrarily. In addition, the optional implementations in a certain embodiment may be combined arbitrarily. Furthermore, the embodiments may be combined arbitrarily. For example, some or all of the steps of different embodiments may be combined arbitrarily, and a certain embodiment may be combined arbitrarily with the optional implementations of other embodiments.

In the embodiments of the present disclosure, unless otherwise specified or unless there is a logical conflict, the terms and/or descriptions among the embodiments are consistent and may be referenced to one another, and the technical environments in different embodiments may be combined according to their inherent logical relationships to form new embodiments.

The terms used in the embodiments of the present disclosure are merely for the purpose of describing particular embodiments, and are not intended as a limitation on the present disclosure.

In the embodiments of the present disclosure, unless otherwise specified, an element expressed in a singular form, such as "a," "an," "the," "the above," "said," "the foregoing," "this," and the like, may represent "one and only one," and may also represent "one or more," "at least one," and the like. For example, where an article such as "a," "an," or "the" in English is used in translation, the noun following the article may be understood as a singular expression, and may also be understood as a plural expression.

In the embodiments of the present disclosure, "a plurality of" means two or more.

In some embodiments, the terms "at least one of," "one or more," "a plurality of," and "multiple" may be interchanged with one another.

In some embodiments, recitations such as "at least one of A and B," "A and/or B," "A in one case, and B in another case," and "A in response to one case, and B in response to another case" may, depending on the circumstances, include the following technical solutions: in some embodiments, A (A is performed independently of B); in some embodiments, B (B is performed independently of A); in some embodiments, a selection is made between A and B for execution (A and B are selectively performed); and in some embodiments, A and B (both A and B are performed). The above is also applied to a case where there are more branches such as A, B, and C.

In some embodiments, a recitation such as "A or B" may, depending on the circumstances, include the following technical solutions: in some embodiments, A (A is performed independently of B); in some embodiments, B (B is performed independently of A); and in some embodiments, a selection is made between A and B for execution (A and B are selectively performed). The above is also applied to a case where there are more branches such as A, B, and C.

The prefixes such as "first" and "second" in the embodiments of the present disclosure are merely used to distinguish different objects, and do not constitute a limitation on the position, order, priority, quantity, content, or the like of the objects. For the statement of an object, reference is made to the description in the context of the claims or the embodiments, and no superfluous limitation should be constituted merely due to the use of the prefixes. For example, if the object is a "field," then the ordinal number before "field" in "first field" and "second field" does not limit the position or order between the "fields," and "first" and "second" do not limit whether the "fields" they modify are in the same message, nor do they limit the sequential order of the "first field" and the "second field." For another example, if the described object is a "level," then the ordinal number before "level" in "first level" and "second level" does not limit the priority between the "levels." For another example, the quantity of an object is not limited by the ordinal number, and may be one or more; taking "first apparatus" as an example, the quantity of the "apparatus" may be one or more. In addition, objects modified by different prefixes may be the same or different. For example, if the object is an "apparatus," then the "first apparatus" and the "second apparatus" may be the same apparatus or different apparatuses, and the types thereof may be the same or different. For another example, if the object is "information," then the "first information" and the "second information" may be the same information or different information, and the contents thereof may be the same or different.

In some embodiments, "including A," "containing A," "used to indicate A," and "carrying A" may be interpreted as directly carrying A, and may also be interpreted as indirectly indicating A.

In some embodiments, the terms "in response to ...," "in response to determining ...," "in the case of ...," "at the time of ...," "when ...," "where ...," and "if ..." may be interchanged with one another.

In some embodiments, the terms "greater than," "greater than or equal to," "not less than," "more than," "more than or equal to," "no less than," "higher than," "higher than or equal to," "not lower than," and "above" may be interchanged with one another; and the terms "less than," "less than or equal to," "not greater than," "fewer than," "fewer than or equal to," "no more than," "lower than," "lower than or equal to," "not higher than," and "below" may be interchanged with one another.

In some embodiments, an apparatus and a device may be interpreted as physical or virtual, and their names are not limited to the names disclosed in the embodiments. In some cases, they may also be understood as "equipment," "device," "circuit," "network element," "node," "function," "unit," "section," "system," "network," "chip," "chip system," "entity," "subject," and the like.

In some embodiments, "network" may be interpreted as an apparatus included in the network, for example, an access network device, a core network device, and the like.

In some embodiments, "access network device (AN device)" may also be referred to as "radio access network device (RAN device)," "base station (BS)," "radio base station," or "fixed station," and in some embodiments may also be understood as "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," "bandwidth part (BWP)," and the like.

In some embodiments, a terminal or a terminal device may be referred to as user equipment (UE), a user terminal, a mobile station (MS), a mobile terminal (MT), a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and the like.

In some embodiments, the acquisition of data, information, and the like may comply with the laws and regulations of the country where they are located.

In some embodiments, data, information, and the like may be acquired after obtaining the consent of the user.

In addition, each element, each row, or each column in a table of the embodiments of the present disclosure may be implemented as an independent embodiment, and a combination of any elements, any rows, or any columns may also be implemented as an independent embodiment.

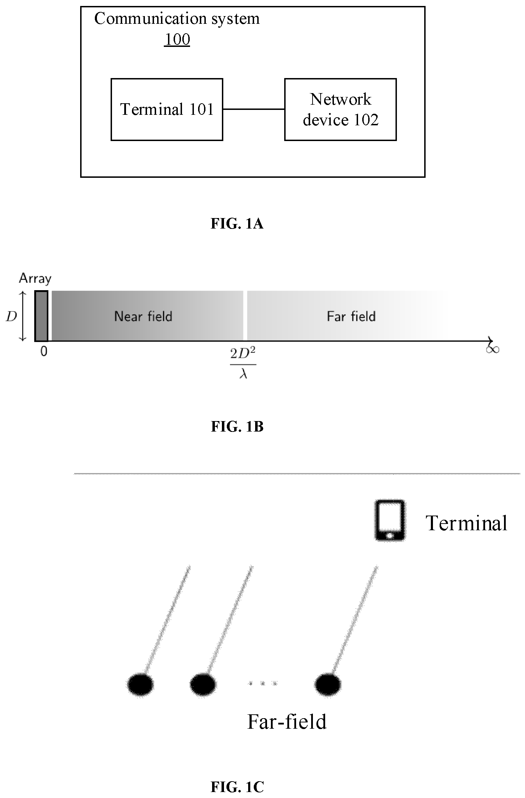

FIG. 1A is a schematic architecture diagram of a communication system according to an embodiment of the present disclosure.

As shown in FIG. 1A, a communication system 100 includes a terminal 101 and a network device 102.

In some embodiments, the terminal 101 includes, for example, at least one of a mobile phone, a wearable device, an Internet of Things device, a vehicle having a communication function, an intelligent vehicle, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home, but is not limited thereto.

In some embodiments, the network device 102 may comprise at least one of an access network device and a core network device.

In some embodiments, the access network device is, for example, a node or device that accesses a terminal to a wireless network, and the access network device may include at least one of in a 5G communication system, an evolved NodeB (eNB), a next generation eNB (ng-eNB), a next generation NodeB (gNB), a node B (NB), a home node B (HNB), a home evolved NodeB (HeNB), a wireless backhaul device, a radio network controller (RNC), a base station controller (BSC), a base transceiver station (BTS), a baseband unit (BBU), a mobile switching center; in a 6G communication system, a base station, an open base station (Open RAN), a cloud base station (Cloud RAN); a base station in another communication system, or an access node in a Wi-Fi system, but is not limited thereto.

In some embodiments, the technical solutions of the present disclosure may be applicable to an Open RAN architecture. In this case, the interfaces between the access network devices or within the access network device in an embodiment of the present disclosure may become internal interfaces of the Open RAN, and the procedures and information interactions between these internal interfaces may be implemented by software or a program.

In some embodiments, the access network device may be composed of a central unit (CU) and a distributed unit (DU), the CU may also be referred to as a control unit. By using the CU-DU structure, the protocol layers of the access network device may be split apart, the functions of some protocol layers are placed in the CU for centralized control, and the functions of the remaining part or all of the protocol layers are distributed in the DU, and the DU is centrally controlled by the CU, but this is not limited thereto.

In some embodiments, the core network device may be one device including one or more network elements, or may be a plurality of devices or a device group respectively including all or part of the above one or more network elements. A network element may be virtual or physical. The core network includes, for example, at least one of an evolved packet core (EPC), a 5G core network (5GCN), or a next generation core (NGC).

It may be understood that the communication system described in the embodiments of the present disclosure is intended to more clearly illustrate the technical solutions of the embodiments of the present disclosure, and does not constitute a limitation on the technical solutions provided in the embodiments of the present disclosure. A person of ordinary skill in the art may know that, with the evolution of the system architecture and the emergence of new service scenarios, the technical solutions provided in the embodiments of the present disclosure are equally applicable to similar technical problems.

The following embodiments of the present disclosure may be applied to the communication system 100 shown in FIG. 1A, or to some of the entities therein, but are not limited thereto. The entities shown in FIG. 1A are illustrative, and the communication system may include all or some of the entities in FIG. 1A, and may also include other entities than those in FIG. 1A. The number and form of the entities are arbitrary, and each entity may be physical or virtual. The connection relationships between the entities are illustrative, and the entities may be unconnected or connected. The connection may be in any manner, may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, a fourth generation mobile communication system (4G), a fifth generation mobile communication system (5G), 5G new radio (NR), Future Radio Access (FRA), New-Radio Access Technology (RAT), New Radio (NR), New Radio Access (NX), Future Generation Radio Access (FX), the Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a Public Land Mobile Network (PLMN) network, a device-to-device (D2D) system, a machine-to-machine (M2M) system, an Internet of Things (IoT) system, Vehicle-to-Everything (V2X), a system using other communication methods, a next generation system extended based thereon, and the like. In addition, a plurality of systems may also be combined (for example, a combination of LTE or LTE-A and 5G, and the like) for application.

In multiple-input multiple-output (MIMO) for a sixth-generation mobile network (6G), in order to be able to provide higher spectral efficiency, a large-scale antenna array in a high-frequency band is introduced. The large-scale antenna can provide a larger beamforming gain and effectively compensate for the transmission loss caused by the high-frequency band.

For an antenna array, the electromagnetic (EM) field of the antenna array (Array) may be divided into a near field and a far field. FIG. 1B is a schematic diagram of electromagnetic field division according to an embodiment of the present disclosure. As shown in FIG. 1B, there is a boundary between the near field and the far field, and this boundary is referred to as a Rayleigh distance. The formula for the boundary is 2D2/λ, where D represents the antenna aperture of the antenna array, and λ represents the wavelength.

In some embodiments, for a terminal in a far-field communication scenario, the electromagnetic waves that arrive at the terminal from different antenna ports or array elements are plane waves. FIG. 1C is a schematic diagram of far-field beam propagation according to an embodiment of the present disclosure. As shown in FIG. 1C, in a far-field communication scenario, the beam directed to the terminal is a two-dimensional (2D) directional beam pointing to the target terminal. For any path in the multipath propagation, the times and phases of arrival at the receiving antenna array of the terminal are equally spaced.

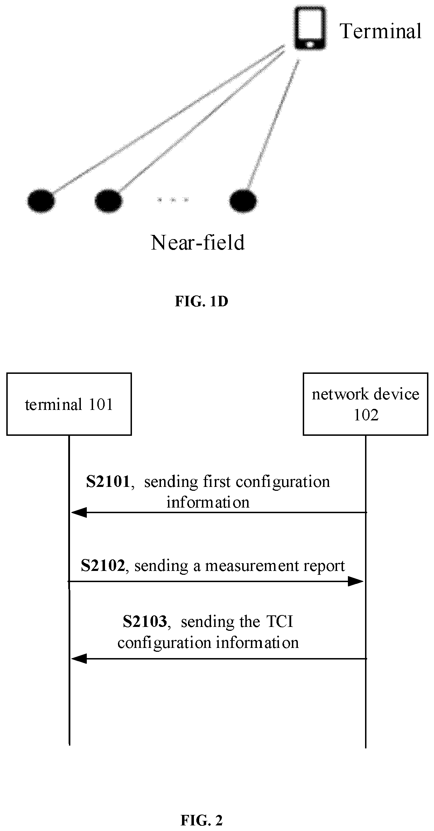

In some embodiments, for a terminal in a near-field communication scenario, the electromagnetic wave received by the terminal is a spherical wave. FIG. 1D is a schematic diagram of near-field beam propagation according to an embodiment of the present disclosure. As shown in FIG. 1D, in a near-field communication scenario, the beam directed to the terminal is a three-dimensional (3D) beam surrounding the target terminal. For any path in the multipath propagation, the times and phases of arrival at the receiving antenna array of the terminal are no longer equally spaced.

That is to say, for a far-field terminal, the directions in which the plurality of antenna ports of the network device (for example, a base station) arrive at the terminal are the same. For a near-field terminal, the beam directions in which different ports among the plurality of antenna ports of the network device (for example, a base station) arrive at the terminal may be different.

For a near-field or far-field communication scenario, it is assumed that the network device has 32 transmit beam directions. In a far-field communication scenario, it is only necessary to transmit 32 reference signal resources at any one port based on the 32 beam directions. However, in a near-field communication scenario, the received signal strength at the terminal of a first beam direction transmitted by the network device at a first port (a certain beam direction among the 32 beam directions) is different from the received signal strength at the terminal of the first beam direction transmitted by the network device at a second port. Therefore, the network device needs to transmit the 32 beam directions at each port respectively.

If a conventional beam management method is adopted, the network device needs to send the reference signal for beam measurement in a single-port way, and then the time for the terminal to perform scanning will increase in multiples as the number of ports increases, causing a large amount of resource overhead.

Therefore, it is necessary to provide a reference signal resource with multiple ports configuration method, so as to reduce the resource overhead of the terminal.

FIG. 2 is a schematic diagram of interaction of a resource configuration method according to an embodiment of the present disclosure. As shown in FIG. 2, the embodiments of the present disclosure relate to a resource configuration method, which is used for the communication system 100, and the method includes the following steps.

Step S2101, the network device 102 sends first configuration information to the terminal 101.

In some embodiments, the terminal 101 receives the first configuration information sent by the network device 102, the first configuration information is used to configure a reference signal resource corresponding to a plurality of ports.

In some embodiments, the first configuration information includes reference signal resource configuration information, and the first configuration information implements configuration of the reference signal resource with multiple ports by using the reference signal resource configuration information included therein.

It should be noted that the reference signal resource with multiple ports refers to a reference signal resource whose number of ports is greater than or equal to 2.

It may be understood that, by using the reference signal resource configuration information in the first configuration information, a plurality of ports of the reference signal resource may be configured for the terminal 101, so that the terminal 101 can perform measurement based on the configured plurality of ports of the reference signal resource to obtain a corresponding measurement report. For example, the terminal 101 measures Layer 1 reference signal received power (L1-RSRP) for the plurality of ports of the reference signal resource, and/or measures Layer 1 signal-to-interference-plus-noise ratio (L1-SINR) for the plurality of ports of the reference signal resource, to obtain the corresponding measurement report.

In some embodiments, "acquire," "obtain," "derive," "receive," "transmit," "bidirectionally transmit," and "send and/or receive" may be interchanged with one another, and may be interpreted as multiple meanings such as receiving from another entity, acquiring from a protocol, acquiring from an upper layer, deriving through self-processing, and autonomously implementing.

In some embodiments, the terms "send," "emit," "report," "deliver," "transmit," "bidirectionally transmit," "send and/or receive," and the like may be interchanged with one another.

In some embodiments, the names of information and the like are not limited to the names recorded in the embodiments, and the terms "information," "message," "signal," "signaling," "report," "configuration," "indication," "instruction," "command," "channel," "parameter," "domain," "field," "symbol," "code element," "codebook," "codeword," "codepoint," "bit," "data," "program," "chip," and the like may be interchanged with one another.

In some embodiments, the terms "synchronization signal (SS)," "synchronization signal block (SSB)," "reference signal (RS)," and the like may be interchanged with one another.

Step S2102, the terminal 101 sends a measurement report to the network device 102.

In some embodiments, before the terminal 101 sends the measurement report to the network device 102, the method further includes: the terminal 101 determines the measurement report.

In some embodiments, the terminal 101 obtains the measurement report by measuring the reference signal resource with multiple ports configured by the reference signal resource configuration information (for example, measuring the L1-RSRP or the L1-SINR thereof).

In some embodiments, the measurement report includes at least one of: a reference signal resource identifier and port information; a quality parameter and port information; or a reference signal resource identifier, a quality parameter, and port information.

The port information may include, for example: a port identifier or a port group identifier of the reference signal resource, and the like. That is, the port information is information used to identify each port of the reference signal resource with a plurality of ports.

The reference signal resource includes: CSI-RS, and/or SSB.

Based on this, the measurement report may also include at least one of: a reference signal resource identifier and a port identifier; a reference signal resource identifier and a port group identifier; a quality parameter and a port identifier; a quality parameter and a port group identifier; a reference signal resource identifier, a quality parameter, and a port identifier; or a reference signal resource identifier, a quality parameter, and a port group identifier.

In some embodiments, the quality parameter is a quality parameter corresponding to a reference signal resource identifier and a port identifier.

In some embodiments, the quality parameter is a quality parameter corresponding to a reference signal resource identifier and a port group identifier.

In some embodiments, the quality parameter is a quality parameter corresponding to a port identifier.

In some embodiments, the quality parameter is a quality parameter corresponding to a port group identifier.

In some embodiments, the quality parameter includes L1-RSRP or L1-SINR.

In some embodiments, the terms "port identifier," "port index," and the like may be interchanged with one another.

In some embodiments, the terms "port group identifier," "port group index," and the like may be interchanged with one another.

It should be noted that there is a correspondence relationship between a port and a port group. For example, a port group may be understood as a set composed of a plurality of ports.

In some embodiments, the correspondence relationship between a port and a port group may be determined as follows. The correspondence relationship is determined based on a default rule, or determined by using second configuration information, and the like.

In some embodiments, for the correspondence relationship determined based on the default rule (the correspondence relationship between a port and a port group), it may be at least one of items 1) to 3):
1) Each port group corresponding to a port group identifier includes N ports with consecutive port identifiers (where N is an integer greater than or equal to 2).

Illustratively, a reference signal resource has 8 ports, namely: port #0, port #1, port #2, port #3, port #4, port #5, port #6, and port #7. If the port groups are determined based on the consecutive port identifiers, and the 8 ports are determined as two port groups, for example, the reference signal resource has two port groups, namely, port group #A and port group #B, the ports in port group #A are: port #0, port #1, port #2, and port #3; and the ports in port group #B are: port #4, port #5, port #6, and port #7.

2) Each port group corresponding to a port group identifier includes N ports with equally spaced port identifiers.

Illustratively, a reference signal resource has 8 ports, namely: port #0, port #1, port #2, port #3, port #4, port #5, port #6, and port #7. If the port groups are determined based on the equally spaced port identifiers (for example, the spacing is 1), and the 8 ports are determined as two port groups, for example, the reference signal resource has two port groups, namely, port group #A and port group #B, the ports in port group #A are: port #0, port #2, port #4, and port #6; and the ports in port group #B are: port #1, port #3, port #5, and port #7.

3) The port identifiers included in each of the port groups corresponding to the port group identifiers are determined based on a protocol.

Illustratively, a reference signal resource has 8 ports, namely: port #0, port #1, port #2, port #3, port #4, port #5, port #6, and port #7. If the port groups are determined based on the protocol (for example, the protocol presets that a plurality of ports are divided into the same port group), for example, the reference signal resource has two port groups, namely, port group #A and port group #B, the ports in port group #A are: port #0, port #1, port #4, and port #5; and the ports in port group #B are: port #2, port #3, port #6, and port #7.

In some embodiments, for the correspondence relationship determined based on the second configuration information (the correspondence relationship between a port and a port group), it may be at least one of: a number of ports included in each port group; or port identifiers of ports included in each port group.

It should be noted that the second configuration information may be the first configuration information, or may be configuration information other than the first configuration information.

In some embodiments, if the port identifiers of the ports included in a port group corresponding to each port group identifier are consecutive, the configuration of the port group may be implemented by configuring, by using the second configuration information, the number of ports included in each port group, in which the starting port identifier is determined by default.

Illustratively, a reference signal resource has 8 ports, namely: port #0, port #1, port #2, port #3, port #4, port #5, port #6, and port #7. If it is known that the port identifiers of the ports included in each port group are consecutive, and the starting port identifier of port group A is port #0, and if the second configuration information configures the number of ports included in group A to be 3, then the ports in port group A are: port #0, port #1, and port #2.

In some embodiments, if the port identifiers included in a port group corresponding to each port group identifier are non-consecutive, the port identifiers in each port group are directly indicated by using the second configuration information.

Illustratively, a reference signal resource has 8 ports, namely: port #0, port #1, port #2, port #3, port #4, port #5, port #6, and port #7. If it is known that the port identifiers of the ports included in each port group are non-consecutive, the ports in port group A may be indicated by using the second configuration information as: port #2, port #4, and port #5 (or other combination, and the like).

In this way, the correspondence relationship between the port identifier and the port group identifier in the port information, and how the correspondence relationship between the two is determined, can be made clear.

In some embodiments, the terminal 101 needs to measure the reference signal resource having a plurality of ports to obtain the quality parameter.

Optionally, the terminal 101 separately measures each port of the reference signal resource with multiple ports to obtain the respectively corresponding quality parameters. The quality parameter may be, for example, L1-RSRP, and/or L1-SINR.

For example, the ports corresponding to reference signal resource A are port #1 and port #2. Then the terminal needs to measure port #1 and/or port #2, so as to obtain, respectively, the quality parameter corresponding to port #1 of the reference signal resource and the quality parameter corresponding to port #2 of the reference signal resource.

It may be understood that, if the terminal 101 is in a far-field communication scenario, since the beam directed to the terminal 101 in the far-field communication scenario is a two-dimensional directional beam pointing to the terminal 101, the times and phases at which the beams sent by the respective ports of the reference signal resource arrive at the receiving antenna array of the terminal 101 are equally spaced. Therefore, in this case, the corresponding measurement report may be obtained by measuring the quality parameter corresponding to one (or some) of the plurality of ports. In this way, the signaling overhead generated during measurement can be reduced.

It may be understood that, taking the measurement of the L1-SINR of the reference signal resource with multiple ports as an example, by measuring the L1-SINR of the reference signal resource with multiple ports and sending the corresponding measurement report together with the port information to the network device 102, the network device 102 can obtain, through the measurement report, the L1-SINR corresponding to each port, and further select a port that meets a requirement (for example, having the strongest L1-SINR) to configure for the terminal 101, so that the terminal 101 and the network device 102 can perform communication transmission based on the QCL assumption corresponding to the port, thereby ensuring communication quality.

In some embodiments, the form of the measurement report may include: a non-group based beam measurement report, and/or a group based beam measurement report. The group based beam measurement report includes at least one beam group.

Taking the group based beam measurement report as an example, the beam group needs to satisfy certain conditions, so that the network device 102 can determine, based on the group based beam measurement report, the measurement results corresponding to different ports of the reference signal resource having a plurality of ports.

Optionally, the beam group satisfies the following condition: each beam group includes at least two different identifier combinations. That is, a beam group needs to include at least two different identifier combinations, to reflect different ports or port groups of the reference signal resource with multiple ports, and further reflect the measurement results corresponding to the different ports or port groups.

Illustratively, at least two different identifier combinations included in each beam group includes at least one of items -1) to -6):
-1) At least two reference signal resource identifiers in the beam group are different, and at least two port group identifiers in the beam group are different. For example, there are two reference signal resource with multiple ports in the beam group, namely, reference signal resource #A and reference signal resource #B, reference signal resource #A has 2 ports and the corresponding port group identifier is #1, and reference signal resource #B has two ports and the corresponding port group identifier is #2. Obviously, port group identifier #1 and port group identifier #2 are two different identifiers.
-2) At least two reference signal resource identifiers in the beam group are different, and at least two port identifiers in the beam group are different. For example, there are two reference signal resource with multiple ports in the beam group, namely, reference signal resource #A and reference signal resource #B, reference signal resource #A has 2 ports and the port identifiers are #A1 and #A2 respectively, and reference signal resource #B has two ports and the port identifiers are #B1 and #B2 respectively. Obviously, the port identifiers are different from one another.
-3) At least two reference signal resource identifiers in the beam group are the same, and the port identifiers of the two reference signal resources are different; or the beam group includes one reference signal resource identifier and two port identifiers. For example, there are two reference signal resource with multiple ports in the beam group, but the identifiers of the two reference signal resources are the same, both being A; or there is one reference signal resource with multiple ports A in the beam group, one port identifier of the reference signal resource is #A1, and the other port identifier is #A2. Obviously, the port identifiers are different.
-4) At least two reference signal resource identifiers in the beam group are the same, and the port group identifiers of the two reference signal resources are different; or the beam group includes one reference signal resource identifier and two port group identifiers. For example, there are two reference signal resource with multiple ports in the beam group, but the identifiers of the two reference signal resources are the same, both being A; or there is one reference signal resource with multiple ports A in the beam group, one port group identifier of the reference signal resource is #1, and the other port group identifier is #2. Obviously, the port group identifiers are different.
-5) At least two port identifiers in the beam group are different. For example, there may be one or more reference signal resource identifiers in the beam group, and the presence of at least two different port identifiers is also considered as the beam group comprising at least two different identifier combinations.
-6) At least two port group identifiers in the beam group are different. For example, there may be one or more reference signal resource identifiers in the beam group, and the presence of at least two different port group identifiers is also considered as the beam group comprising at least two different identifier combinations.

It may be understood that, for the cases of -5) and -6), because the beam directions of the same port corresponding to different reference signal resources are the same and the same port cannot point to different beam directions at the same time, in some cases it is unnecessary to consider whether the reference signal resource identifiers are the same, and it is sufficient to directly consider whether the port identifiers or the port group identifiers included in the beam group are the same.

Through the foregoing embodiments, the network device 102 can determine, through the measurement report reported by the terminal 101, the measurement result corresponding to each port of the reference signal resource with multiple ports, and further can configure, for the terminal 101, a port for performing communication transmission. For example, the port with the strongest signal strength can be determined through the quality parameter measurement result corresponding to each port of each reference signal resource with multiple ports, and configured for the terminal 101 for performing subsequent communication transmission.

Step S2103, the network device 102 sends the TCI configuration information to the terminal 101.

In some embodiments, the terminal 101 receives the TCI configuration information sent by the network device 102.

In some embodiments, the TCI configuration information is used to configure a Transmission Configuration Indicator State (TCI state). The TCI state is used to indicate a reference signal resource identifier and port information corresponding to Quasi co-location (QCL).

It may be understood that, in the case where the reference signal resource is configured to have multiple ports, the measurement results corresponding to the respective ports may be different (for example, in a near-field communication scenario, the signal strengths at which the reference signals corresponding to the respective ports arrive at the terminal are different). If the TCI state still only indicates the reference signal resource identifier corresponding to the QCL, the reference signal resource corresponding to the QCL cannot be determined (that is, it cannot be determined which port of the reference signal resource with multiple ports the reference signal resource corresponding to the QCL comes from). Therefore, for a reference signal resource with multiple ports, it is necessary to explicitly indicate, through the TCI state, the port information corresponding to the reference signal resource.

In some embodiments, the port information indicated by the TCI state may be the port information determined by the network device 102 based on the measurement report in step S2102, for example, the determined port information having the optimal reference signal quality parameter, and the like.

It may be understood that each QCL type corresponds to one reference signal resource identifier, and a conventional TCI state may correspond to the following four QCL types:
- Type A: Type A may represent Doppler shift, Doppler spread, average delay, and delay spread.
- Type B: Type B may represent Doppler shift and Doppler spread.
- Type C: Type C may represent Doppler shift and average delay.
- Type D: Type D may represent a spatial reception parameter (Spatial Rx parameter).

It should be noted that, since each of the four QCL types may correspond to one reference signal resource identifier, but none of them corresponds to port information. Therefore, it is necessary to indicate, through the TCI state, the reference signal resource corresponding to the QCL and the corresponding port information. For the reference signal resource identifier and the port information corresponding to the QCL indicated by the TCI state, this may be implemented in the following two manners -a) and -b):
- a) Implemented by reusing an existing QCL type.
- b) Implemented by adding a new QCL type.

For the case of -a), since each existing QCL type may correspond to one reference signal resource identifier, what is indicated by the TCI state only needs to reuse an existing QCL type and simultaneously indicate the port information.

Illustratively, the TCI state may indicate the reference signal resource identifier and the port information corresponding to the QCL as follows. The TCI state indicates a reference signal resource identifier corresponding to a first type of QCL and port information corresponding to the first type of QCL, the first type of QCL is a Type D QCL (that is, a QCL representing a spatial Rx parameter).

Based on this, by reusing an existing QCL type, the resource overhead caused by introducing new signaling can be avoided.

For the case of -b), a QCL type used to represent the port information may be newly added, and this is implemented by simultaneously indicating, through the TCI state, the resource identifier of an existing QCL type and the port information corresponding to the newly added QCL type.

Illustratively, the TCI state may indicate the reference signal resource identifier and the port information corresponding to the QCL as follows. The TCI state indicates a reference signal resource identifier corresponding to a first type (Type D) of QCL and port information corresponding to a second type of QCL, the first type of QCL is a Type D QCL, and the second type of QCL is different from the first type of QCL.

Optionally, the reference signal resource identifier has a correspondence relationship with the second type of QCL.

It may be understood that the second type of QCL is the newly added QCL type used to represent the port information.

In some embodiments, the second type of QCL represents at least one of: a first distance; a port identifier; or a port group identifier.

Optionally, the first distance is determined based on the port information.

It may be understood that, in a scenario where communication transmission is performed at the same port (that is, based on the same direction), there may be a plurality of terminals, for example, terminal #1, terminal #2, terminal #3, and so on. However, in the same direction, the distances at which the port reaches different terminals may be different. For example, the distance corresponding to the port and terminal #1 is a, the distance corresponding to the port and terminal #2 is b, and the distance corresponding to the port and terminal #3 is c, in which the relationship among a, b, and c is: a<b<c. In the case where no distance indication is performed, and the network device sends a beam in the direction of terminal #3, since terminal #1 and terminal #2 are closer to the network device than terminal #3 in this direction, the network device may cause interference to terminal #1 and terminal #2 in the process of sending the beam to terminal #3. Therefore, by indicating the distance, the network device can directly send the beam to terminal #3 in this direction, thereby reducing the interference to terminal #1 and terminal #2.

In some embodiments, the port identifier may be, for example, an anchor port identifier.

In some embodiments, the port group identifier may be, for example, an anchor port group identifier.

It should be noted that, if the communication scenario is a far-field communication scenario, based on the description of the far-field communication scenario in the foregoing related embodiments, the directions corresponding to the respective ports of the reference signal resource with multiple ports and the distances at which the respective ports arrive at the terminal are all the same. Therefore, in the case where the communication scenario is a far-field communication scenario, the TCI state may not need to indicate the port information.

In some embodiments, the terms "certain," "predetermined," "preset," "set," "indicated," "one," "any," "first," and the like may be interchanged with one another; and "certain A," "predetermined A," "preset A," "set A," "indicated A," "one A," "any A," and "first A" may be interpreted as A pre-specified in a protocol or the like, may also be interpreted as A obtained through setting, configuration, indication, or the like, and may also be interpreted as certain A, one A, any A, first A, or the like, but is not limited thereto.

The resource configuration method involved in the embodiments of the present disclosure may include at least one of steps S2101 to S2103. For example, step S2101 may be implemented as an independent embodiment, step S2102 may be implemented as an independent embodiment, step S2103 may be implemented as an independent embodiment, and step S2101 + step S2102 + step S2103 may be implemented as an independent embodiment, but this is not limited thereto.

In some embodiments, step S2101 and step S2102 may be interchanged in order or performed simultaneously, and step S2102 and step S2103 may be interchanged in order or performed simultaneously.

In some embodiments, step S2101 and step S2102 are optional, and in different embodiments, one or more of these steps may be omitted or replaced.

In some embodiments, step S2101 and step S2103 are optional, and in different embodiments, one or more of these steps may be omitted or replaced.

In some embodiments, step S2102 and step S2103 are optional, and in different embodiments, one or more of these steps may be omitted or replaced.

In some embodiments, reference may be made to other optional implementations described before or after the content corresponding to FIG. 2.

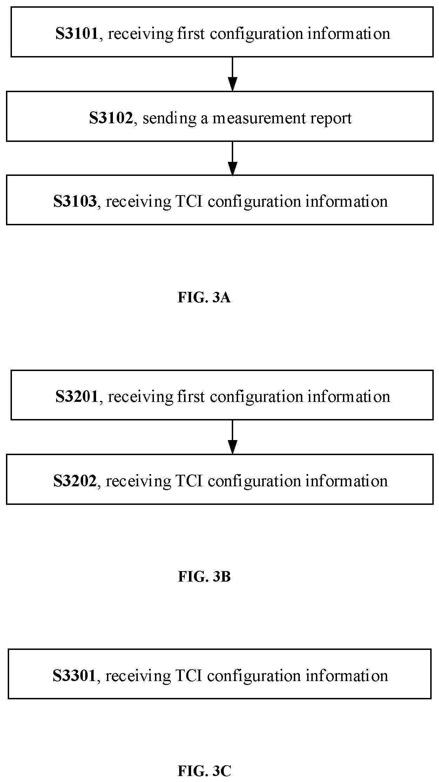

FIG. 3A is a schematic flowchart of a resource configuration method illustrated according to an embodiment of the present disclosure. As shown in FIG. 3A, the embodiments of the present disclosure relate to a resource configuration method, and the foregoing method includes the following steps.

Step S3101, first configuration information is received.

For the optional implementation of step S3101, reference may be made to the optional implementation of step S2101 in FIG. 2 and other related parts in the embodiments involved in FIG. 2, and details are not repeated herein.

In some embodiments, the terminal 101 receives the first configuration information sent by the access network device 102, but is not limited thereto, and may also receive the first configuration information sent by another entity.

In some embodiments, the terminal 101 obtains the first configuration information specified by a protocol.

In some embodiments, the terminal 101 obtains the first configuration information from an upper layer (upper layer(s)).

In some embodiments, the terminal 101 performs processing to obtain the first configuration information.

In some embodiments, step S3101 is omitted, and the terminal 101 autonomously implements the function indicated by the first configuration information, or the foregoing function is a default or preset function.

Step S3102, a measurement report is sent.

For the optional implementation of step S3102, reference may be made to the optional implementation of step S2102 in FIG. 2 and other related parts in the embodiments involved in FIG. 2, and details are not repeated herein.

Step S3103, TCI configuration information is received.

For the optional implementation of step S3103, reference may be made to the optional implementation of step S2103 in FIG. 2 and other related parts in the embodiments involved in FIG. 2, and details are not repeated herein.

The resource configuration method in the embodiments of the present disclosure may include at least one of steps S3101 to S3103. For example, step S3101 may be implemented as an independent embodiment, step S3102 may be implemented as an independent embodiment, step S3103 may be implemented as an independent embodiment, and step S3101 + step S3102 + step S3103 may be implemented as an independent embodiment, but this is not limited thereto.

In some embodiments, step S3101 and step S3102 may be interchanged in order or performed simultaneously, and step S3102 and step S3103 may be interchanged in order or performed simultaneously.

In some embodiments, step S3101 and step S3102 are optional, and in different embodiments, one or more of these steps may be omitted or replaced.

In some embodiments, step S3101 and step S3103 are optional, and in different embodiments, one or more of these steps may be omitted or replaced.

In some embodiments, step S3102 and step S3103 are optional, and in different embodiments, one or more of these steps may be omitted or replaced.

FIG. 3B is a schematic flowchart of a resource configuration method according to an embodiment of the present disclosure. As shown in FIG. 3B, the embodiments of the present disclosure relate to a resource configuration method, and the method includes the following steps.

Step S3201, first configuration information is received.

For the optional implementation of step S3201, reference may be made to the optional implementations of step S2101 in FIG. 2 and step S3101 in FIG. 3A, and other related parts in the embodiments involved in FIG. 2 and FIG. 3A, and details are not repeated herein.

Step S3202, TCI configuration information is received.

For the optional implementation of step S3202, reference may be made to the optional implementations of step S2102 and step S2103 in FIG. 2 and step S3102 and step S3103 in FIG. 3A, and other related parts in the embodiments involved in FIG. 2 and FIG. 3A, and details are not repeated herein.

The resource configuration method in the embodiments of the present disclosure may include at least one of steps S3201 to S3202. For example, step S3201 may be implemented as an independent embodiment, step S3202 may be implemented as an independent embodiment, and step S3201 + step S3202 may be implemented as an independent embodiment, but this is not limited thereto.

In some embodiments, step S3201 and step S3202 may be interchanged in order or performed simultaneously.

In some embodiments, step S3201 is optional, and in different embodiments, one or more of these steps may be omitted or replaced.

In some embodiments, step S3202 is optional, and in different embodiments, one or more of these steps may be omitted or replaced.

FIG. 3C is a schematic flowchart of a resource configuration method according to an embodiment of the present disclosure. As shown in FIG. 3C, the embodiments of the present disclosure relate to a resource configuration method, and the foregoing method includes the following steps.

Step S3301, TCI configuration information is received.

In some embodiments, the TCI configuration information is used to configure a TCI state, and the TCI state is used to indicate a reference signal resource identifier and port information corresponding to QCL.

For the optional implementation of step S3301, reference may be made to the optional implementations of step S2101, step S2102, and step S2103 in FIG. 2, step S3101, step S3102, and step S3103 in FIG. 3A, and step S3201 and step S3202 in FIG. 3B, and other related parts in the embodiments involved in FIG. 2, FIG. 3A, and FIG. 3B, and details are not repeated herein.

In some embodiments, the method further includes: receiving, by the terminal, first configuration information, in which the first configuration information includes reference signal resource configuration information, the reference signal resource configuration information is used to configure a reference signal resource, and the reference signal resource corresponds to a plurality of ports; and sending a measurement report to a network device, in which the measurement report is obtained through measurement based on the reference signal resource, and the measurement report includes at least one of: a reference signal resource identifier and port information; a quality parameter of the reference signal and port information; or a reference signal resource identifier, a quality parameter of the reference signal, and port information.

In some embodiments, the TCI state indicates the reference signal resource identifier and the port information as follows. The TCI state indicates a reference signal resource identifier corresponding to a first type of QCL and port information corresponding to the first type of QCL, the first type of QCL represents a spatial reception parameter.

In some embodiments, the TCI state indicates the reference signal resource identifier and the port information as follows. The TCI state indicates a reference signal resource identifier corresponding to a first type of QCL and port information corresponding to a second type of QCL, the first type of QCL represents a spatial reception parameter, and the second type of QCL is different from the first type of QCL.

In some embodiments, the second type of QCL represents at least one of: a first distance; a port identifier; or a port group identifier.

In some embodiments, the first distance is determined based on port information.

In some embodiments, the port information includes: a port identifier, and/or a port group identifier, and in a case where the measurement report includes the port group identifier, the port group identifier has a correspondence relationship with the port identifier, and the correspondence relationship is determined based on a default rule or based on second configuration information, the second configuration information includes: the first configuration information, or configuration information other than the first configuration information.

In some embodiments, the correspondence relationship determined based on the default rule includes at least one of: each port group corresponding to a port group identifier includes N ports with consecutive port identifiers; each port group corresponding to a port group identifier includes N ports with equally spaced port identifiers; or port identifiers included in each of the port groups corresponding to the port group identifiers are determined based on a protocol, where N is an integer greater than or equal to 2.

In some embodiments, the correspondence relationship determined based on the second configuration information includes at least one of: a number of ports included in each port group; or port identifiers of ports included in each port group.

In some embodiments, the measurement report includes at least one of: a non-group based beam measurement report; or a group based beam measurement report, in which the group based beam measurement report includes at least one beam group.

In some embodiments, the beam group satisfies at least one of: at least two reference signal resource identifiers in the beam group are different, and at least two port identifiers in the beam group are different; at least two reference signal resource identifiers in the beam group are different, and at least two port group identifiers in the beam group are different; at least two port identifiers in the beam group are different; or at least two port group identifiers in the beam group are different.

In some embodiments, the reference signal resource includes at least one of: CSI-RS; or SSB.

In some embodiments, the TCI configuration information includes at least one of: RRC; MAC CE; or DCI.

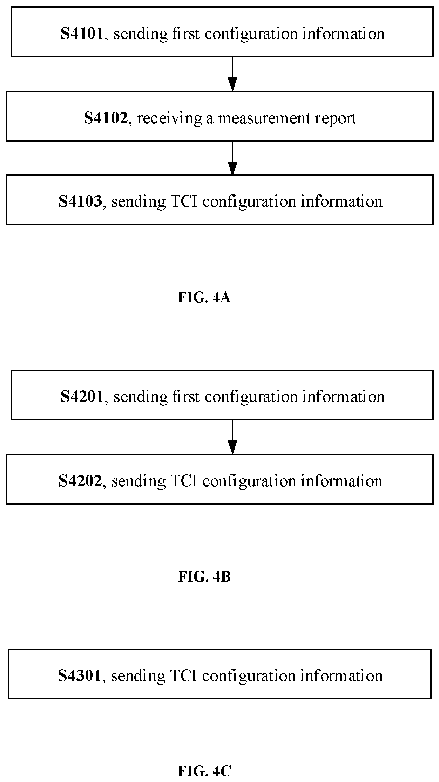

FIG. 4A is a schematic flowchart of a resource configuration method according to an embodiment of the present disclosure. As shown in FIG. 4A, the embodiments of the present disclosure relate to a resource configuration method, and the foregoing method includes the following steps.

Step S4101, first configuration information is sent.

For the optional implementation of step S4101, reference may be made to the optional implementation of step S2101 in FIG. 2 and other related parts in the embodiments involved in FIG. 2, and details are not repeated herein.

Step S4102, a measurement report is received.

For the optional implementation of step S4102, reference may be made to the optional implementation of step S2102 in FIG. 2 and other related parts in the embodiments involved in FIG. 2, and details are not repeated herein.

Step S4103, TCI configuration information is sent.

For the optional implementation of step S4103, reference may be made to the optional implementation of step S2103 in FIG. 2 and other related parts in the embodiments involved in FIG. 2, and details are not repeated herein.

The resource configuration method in the embodiments of the present disclosure may include at least one of steps S4101 to S4103. For example, step S4101 may be implemented as an independent embodiment, step S4102 may be implemented as an independent embodiment, step S4103 may be implemented as an independent embodiment, and step S4101 + step S4102 + step S4103 may be implemented as an independent embodiment, but this is not limited thereto.

In some embodiments, step S4101 and step S4102 may be interchanged in order or performed simultaneously, and step S4102 and step S4103 may be interchanged in order or performed simultaneously.

In some embodiments, step S4101 and step S4102 are optional, and in different embodiments, one or more of these steps may be omitted or replaced.

In some embodiments, step S4101 and step S4103 are optional, and in different embodiments, one or more of these steps may be omitted or replaced.

In some embodiments, step S4102 and step S4103 are optional, and in different embodiments, one or more of these steps may be omitted or replaced.

FIG. 4B is a schematic flowchart of a resource configuration method according to an embodiment of the present disclosure. As shown in FIG. 4B, the embodiments of the present disclosure relate to a resource configuration method, and the foregoing method includes the following steps.

Step S4201, first configuration information is sent.

For the optional implementation of step S4201, reference may be made to the optional implementations of step S2101 in FIG. 2 and step S4101 in FIG. 4A, and other related parts in the embodiments involved in FIG. 2 and FIG. 4A, and details are not repeated herein.

Step S4202, TCI configuration information is sent.

For the optional implementation of step S4202, reference may be made to the optional implementations of step S2102 and step S2103 in FIG. 2 and step S4102 and step S4103 in FIG. 4A, and other related parts in the embodiments involved in FIG. 2 and FIG. 4A, and details are not repeated herein.

The resource configuration method involved in the embodiments of the present disclosure may comprise at least one of steps S4201 to S4202. For example, step S4201 may be implemented as an independent embodiment, step S4202 may be implemented as an independent embodiment, and step S4201 + step S4202 may be implemented as an independent embodiment, but this is not limited thereto.

In some embodiments, step S4201 and step S4202 may be interchanged in order or performed simultaneously.

In some embodiments, step S4201 is optional, and in different embodiments, one or more of these steps may be omitted or replaced.

In some embodiments, step S4202 is optional, and in different embodiments, one or more of these steps may be omitted or replaced.

FIG. 4C is a schematic flowchart of a resource configuration method according to an embodiment of the present disclosure. As shown in FIG. 4C, the embodiments of the present disclosure relate to a resource configuration method, and the foregoing method includes the following steps.

Step S4301, TCI configuration information is sent.

In some embodiments, the TCI configuration information is used to configure a TCI state, and the TCI state is used to indicate a reference signal resource identifier and port information corresponding to QCL.

For the optional implementation of step S4301, reference may be made to the optional implementations of step S2101, step S2102, and step S2103 in FIG. 2, step S4101, step S4102, and step S4103 in FIG. 4A, and step S4201 and step S4202 in FIG. 4B, and other related parts in the embodiments involved in FIG. 2, FIG. 4A, and FIG. 4B, and details are not repeated herein.

In some embodiments, the method further includes: sending, by the network device, first configuration information, in which the first configuration information includes reference signal resource configuration information, the reference signal resource configuration information is used to configure a reference signal resource, and the reference signal resource corresponds to a plurality of ports; and receiving a measurement report sent by a terminal, in which the measurement report is obtained through measurement based on the reference signal resource, and the measurement report includes at least one of: a reference signal resource identifier and port information; a quality parameter of the reference signal and port information; or a reference signal resource identifier, a quality parameter of the reference signal, and port information.

In some embodiments, the TCI state indicates the reference signal resource identifier and the port information as follows. The TCI state indicates a reference signal resource identifier corresponding to a first type of QCL and port information corresponding to the first type of QCL, wherein the first type of QCL represents a spatial reception parameter.

In some embodiments, the TCI state indicates the reference signal resource identifier and the port information as follows. The TCI state indicates a reference signal resource identifier corresponding to a first type of QCL and port information corresponding to a second type of QCL, wherein the first type of QCL represents a spatial reception parameter, and the second type of QCL is different from the first type of QCL.

In some embodiments, the second type of QCL represents at least one of: a first distance; a port identifier; or a port group identifier.

In some embodiments, the first distance is determined based on port information.

In some embodiments, the port information includes: a port identifier, and/or a port group identifier, and in a case where the measurement report includes the port group identifier, the port group identifier has a correspondence relationship with the port identifier, and the correspondence relationship is determined based on a default rule or based on second configuration information, in which the second configuration information includes: the first configuration information, or configuration information other than the first configuration information.

In some embodiments, the correspondence relationship determined based on the default rule includes at least one of: each port group corresponding to a port group identifier includes N ports with consecutive port identifiers; each port group corresponding to a port group identifier includes N ports with equally spaced port identifiers; or port identifiers included in each of the port groups corresponding to the port group identifiers are determined based on a protocol, where N is an integer greater than or equal to 2.

In some embodiments, the correspondence relationship determined based on the second configuration information includes at least one of: a number of ports included in each port group; or port identifiers of ports included in each port group.

In some embodiments, the measurement report includes at least one of: a non-group based beam measurement report; or a group based beam measurement report, in which the group based beam measurement report includes at least one beam group.

In some embodiments, the beam group satisfies at least one of: at least two reference signal resource identifiers in the beam group are different, and at least two port identifiers in the beam group are different; at least two reference signal resource identifiers in the beam group are different, and at least two port group identifiers in the beam group are different; at least two port identifiers in the beam group are different; or at least two port group identifiers in the beam group are different.

In some embodiments, the reference signal resource includes at least one of: CSI-RS; or SSB.

In some embodiments, the TCI configuration information includes at least one of: RRC; MAC CE; or DCI.

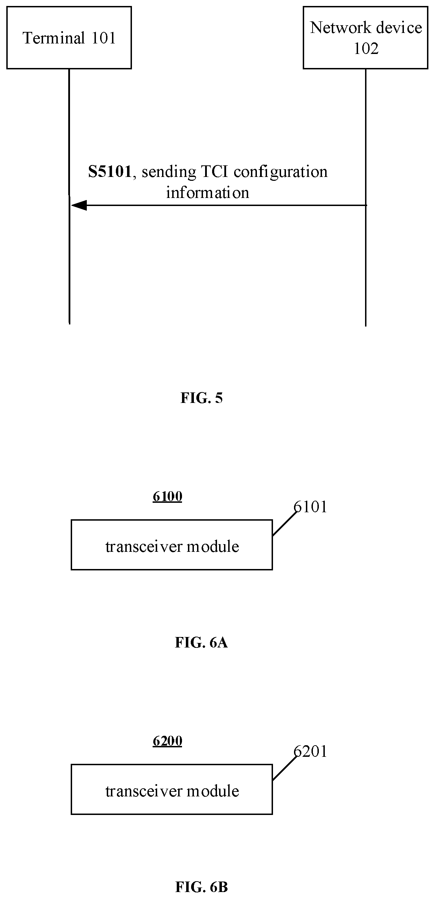

FIG. 5 is a schematic diagram of interaction of a resource configuration method according to an embodiment of the present disclosure. As shown in FIG. 5, the embodiments of the present disclosure relate to a resource configuration method, and the foregoing method includes the following steps.

Step S5101, TCI configuration information is sent.

In some embodiments, the TCI configuration information is used to configure a TCI state, and the TCI state is used to indicate a reference signal resource identifier and port information corresponding to QCL.

For the optional implementation of step S5101, reference may be made to the optional implementations of step S2101, step S2102, and step S2103 in FIG. 2, and other related parts in the embodiments involved in FIG. 2, and details are not repeated herein.

In some embodiments, the foregoing method may also include the methods described in the foregoing embodiments on the communication system side, the terminal side, the network device side, and the like, and details are not repeated herein.

In some embodiments, the embodiments of the present disclosure further provide a communication method, a reference signal resource used for beam measurement may be configured as having multiple ports, and when the beam measurement result is reported, not only the reference signal resource identifier is reported, but also the port index or the port group index is reported (used to indicate the distance at which each port or port group arrives at the terminal), so that the base station can more accurately learn which port provides the best performance for the terminal to perform transmission.

In some embodiments, the terminal receives TCI state configuration information, the TCI state configuration information includes at least one TCI state, and the at least one TCI state indicates a reference signal resource identifier and a port identifier or a port group identifier corresponding to QCL information.

It may be understood that a conventional TCI state may correspond to the following four QCL Types, and each QCL Type corresponds to one reference signal resource identifier:
- Type A: Type A may represent Doppler shift, Doppler spread, average delay, and delay spread.
- Type B: Type B may represent Doppler shift and Doppler spread.
- Type C: Type C may represent Doppler shift and average delay.
- Type D: Type D may represent a spatial reception parameter (Spatial Rx parameter).

In some embodiments, the port identifier/port group identifier provided in the present disclosure may correspond to the conventional Type D, that is, QCL Type D corresponds to one reference signal resource identifier and one port or port group identifier; or a new type E is introduced, type E is defined to represent: a distance, a port identifier, or a port group identifier.

It may be understood that a Type E is added, which is used to indicate one port or port group identifier, and the reference signal resource corresponding to the port or port group identifier is the reference signal resource indicated by Type D.

In some embodiments, the port/port group identifier optionally appears in the TCI state configuration information, for example, it appears only for a near-field UE, and does not appear for a far-field UE.

In some embodiments, the terminal receives first configuration information, the first configuration information includes reference signal resource configuration information, and the reference signal resource corresponds to a plurality of ports; the terminal performs measurement based on the reference signal resource configuration information to obtain a measurement report, and the terminal sends the measurement report to the network device, in which the measurement report includes at least one of a reference signal resource identifier, L1-RSRP/L1-SINR, a port identifier, and a port group identifier.

In some embodiments, in a case where the measurement report includes a port group identifier, the method for determining the correspondence relationship between the port group identifier and the port identifier is as follows. The correspondence relationship is determined based on a default rule, and/or indicated based on configuration information.

Optionally, the determination based on the default rule is, for example: each port group includes N consecutive ports; each port group includes N equally spaced ports; or the protocol specifies the ports included in a port group.

Illustratively, if it is determined by the default rule, then the reference signal resource or channel may not need to occupy all the ports in each port group. For example, a port group includes ports 0, 1, and 2, while the reference signal and the channel may occupy only 0, or 0 and 1.

In some embodiments, the indication based on configuration information is, for example: if the ports included are consecutive, the number of ports included in each port group is configured, in which the starting port index is determined by default; if the ports included are non-consecutive, the port identifier (index) of the ports included in each port group is directly indicated.

In some embodiments, the measurement report includes a group based beam measurement report, or a non-group based beam measurement report.

Optionally, the group based beam measurement report includes at least one beam group, and each beam group includes at least two different identifier combinations, for example:
- 1) An identifier combination includes a reference signal resource identifier, and a port identifier or a port group identifier; if anyone is different, the identifier combinations are different.
- 2) The reference signal resource identifiers corresponding to the identifier combinations included in the beam group may be the same.
- 3) The port or port group identifiers corresponding to the identifier combinations included in the beam group cannot be the same.

It should be noted that, for -3), since the beam directions of the same port corresponding to different reference signal resources are the same, and the same port cannot point to different beam directions at the same time, it is therefore required that the port or port group identifiers corresponding to the identifier combinations cannot be the same.

In some embodiments, the reference signal resource includes CSI-RS, or SSB.

In some embodiments, the TCI state configuration information is RRC, MAC CE, and/or DCI.

Based on this, the present disclosure proposes that the TCI state not only indicates the reference signal resource identifier, but also indicates the port/port group index to indicate the distance at which the port/port group arrives at the terminal, so as to facilitate the base station in selecting an appropriate port/port group for the terminal to perform transmission.

In the embodiments of the present disclosure, some or all of the steps and the optional implementations thereof may be combined arbitrarily with some or all of the steps in other embodiments, and may also be combined arbitrarily with the optional implementations of other embodiments.

The embodiments of the present disclosure further provide an apparatus for implementing any of the foregoing methods. For example, an apparatus is provided, wherein the foregoing apparatus includes units or modules for implementing the respective steps performed by the terminal in any of the foregoing methods. For another example, another apparatus is further provided, and includes units or modules for implementing the respective steps performed by the network device (for example, an access network device, a core network function node, a core network device, and the like) in any of the foregoing methods.

It should be understood that the division of the respective units or modules in the foregoing apparatus is merely a division of logical functions, and in actual implementation, they may be fully or partially integrated into one physical entity, or may be physically separated. In addition, the units or modules in the apparatus may be implemented in the form of a processor invoking software. For example, the apparatus includes a processor, the processor is connected to a memory, the memory stores instructions, and the processor invokes the instructions stored in the memory to implement any of the foregoing methods or to implement the functions of the respective units or modules of the foregoing apparatus, the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of a hardware circuit, and the functions of some or all of the units or modules may be implemented through the design of the hardware circuit, and the foregoing hardware circuit may be understood as one or more processors. For example, in one implementation, the foregoing hardware circuit is an application-specific integrated circuit (ASIC), and the functions of some or all of the foregoing units or modules are implemented through the design of the logical relationships of the elements within the circuit. For another example, in another implementation, the foregoing hardware circuit may be implemented by a programmable logic device (PLD). Taking a field programmable gate array (FPGA) as an example, it may include a large number of logic gate circuits, and the connection relationships between the logic gate circuits are configured through a configuration file, so as to implement the functions of some or all of the foregoing units or modules. All of the units or modules of the foregoing apparatus may be implemented entirely in the form of a processor invoking software, or entirely in the form of a hardware circuit, or partially in the form of a processor invoking software with the remaining part in the form of a hardware circuit.

In the embodiments of the present disclosure, the processor is a circuit having a signal processing capability. In one implementation, the processor may be a circuit having an instruction reading and running capability, such as a CPU, a microprocessor, a graphics processing unit (GPU) (which may be understood as a microprocessor), or a digital signal processor (DSP), and the like. In another implementation, the processor may implement certain functions through the logical relationships of a hardware circuit, and the logical relationships of the foregoing hardware circuit are fixed or reconfigurable. For example, the processor is a hardware circuit implemented by an ASIC or a PLD, such as an FPGA. In a reconfigurable hardware circuit, the process in which the processor loads a configuration file to implement the configuration of the hardware circuit may be understood as the process in which the processor loads instructions to implement the functions of some or all of the foregoing units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 6A is a schematic structural diagram of a terminal according to an embodiment of the present disclosure. As shown in FIG. 6A, the terminal 6100 may include: a transceiver module 6101. Optionally, the transceiver module 6101 is configured to perform at least one of the communication steps such as sending and/or receiving performed by the terminal 101 in any of the foregoing methods (for example, step S2101, step S2102, and step S2103, but not limited thereto), and details are not repeated herein.

In some embodiments, the transceiver module may include a sending module and/or a receiving module, and the sending module and the receiving module may be separate or integrated together. Optionally, the transceiver module may be interchanged with a transceiver.

In some embodiments, the transceiver module 6101 is configured to receive TCI configuration information, the TCI configuration information is used to configure a TCI state, and the TCI state is used to indicate a reference signal resource identifier and port information corresponding to QCL.

In some embodiments, the transceiver module 6101 is further configured to receive first configuration information, the first configuration information includes reference signal resource configuration information, the reference signal resource configuration information is used to configure a reference signal resource, and the reference signal resource corresponds to a plurality of ports.

In some embodiments, the transceiver module 6101 is further configured to send a measurement report to the network device, the measurement report is obtained through measurement based on the reference signal resource.

In some embodiments, the measurement report includes at least one of: a reference signal resource identifier and port information; a quality parameter and port information; or a reference signal resource identifier, a quality parameter, and port information.

In some embodiments, the TCI state indicates the reference signal resource identifier and the port information as follows. The TCI state indicates a reference signal resource identifier corresponding to a first type of QCL and port information corresponding to the first type of QCL, the first type of QCL represents a spatial reception parameter.

In some embodiments, the TCI state indicates the reference signal resource identifier and the port information as follows. The TCI state indicates a reference signal resource identifier corresponding to a first type of QCL and port information corresponding to a second type of QCL, the first type of QCL represents a spatial reception parameter, and the second type of QCL is different from the first type of QCL.

In some embodiments, the second type of QCL represents at least one of: a first distance; a port identifier; or a port group identifier.

In some embodiments, the first distance is determined based on port information.

In some embodiments, the port information includes: a port identifier, and/or a port group identifier, and in a case where the measurement report includes a port group identifier, the port group identifier has a correspondence relationship with the port identifier, and the correspondence relationship is determined based on a default rule or based on second configuration information, the second configuration information includes: the first configuration information, or configuration information other than the first configuration information.

In some embodiments, the correspondence relationship determined based on the default rule includes at least one of: each port group corresponding to a port group identifier includes N ports with consecutive port identifiers; each port group corresponding to a port group identifier includes N ports with equally spaced port identifiers; or port identifiers included in each of the port groups corresponding to the port group identifiers are determined based on a protocol, where N is an integer greater than or equal to 2.

In some embodiments, the correspondence relationship determined based on the second configuration information includes at least one of: a number of ports included in each port group; or port identifiers of ports included in each port group.

In some embodiments, the measurement report includes at least one of: a non-group based beam measurement report; or a group based beam measurement report, in which the group based beam measurement report includes at least one beam group.

In some embodiments, the beam group satisfies at least one of: at least two reference signal resource identifiers in the beam group are different, and at least two port identifiers in the beam group are different; at least two reference signal resource identifiers in the beam group are different, and at least two port group identifiers in the beam group are different; at least two port identifiers in the beam group are different; or at least two port group identifiers in the beam group are different.

In some embodiments, the reference signal resource includes at least one of: CSI-RS; or SSB.

In some embodiments, the TCI configuration information includes at least one of: RRC; MAC CE; or DCI.

FIG. 6B is a schematic structural diagram of a network device according to an embodiment of the present disclosure. As shown in FIG. 6B, the network device 6200 may include: a transceiver module 6201, configured to send TCI configuration information, the TCI configuration information is used to configure a TCI state, and the TCI state is used to indicate a reference signal resource identifier and port information corresponding to QCL. Optionally, the transceiver module 6201 is configured to perform at least one of the communication steps such as sending and/or receiving performed by the network device 102 in any of the foregoing methods (for example, step S2101, step S2102, and step S2103, but not limited thereto), and details are not repeated herein.

In some embodiments, the transceiver module may include a sending module and/or a receiving module, and the sending module and the receiving module may be separate or integrated together. Optionally, the transceiver module may be interchanged with a transceiver.

In some embodiments, the transceiver module 6201 is further configured to send first configuration information, in which the first configuration information includes reference signal resource configuration information, the reference signal resource configuration information is used to configure a reference signal resource, and the reference signal resource corresponds to a plurality of ports; and receive a measurement report sent by a terminal, in which the measurement report is obtained through measurement based on the reference signal resource, and the measurement report includes at least one of: a reference signal resource identifier and port information; a quality parameter and port information; or a reference signal resource identifier, a quality parameter, and port information.

In some embodiments, the TCI state indicates the reference signal resource identifier and the port information as follows. The TCI state indicates a reference signal resource identifier corresponding to a first type of QCL and port information corresponding to the first type of QCL, the first type of QCL represents a spatial reception parameter.

In some embodiments, the TCI state indicates the reference signal resource identifier and the port information as follows. The TCI state indicates a reference signal resource identifier corresponding to a first type of QCL and port information corresponding to a second type of QCL, the first type of QCL represents a spatial reception parameter, and the second type of QCL is different from the first type of QCL.

In some embodiments, the second type of QCL represents at least one of: a first distance; a port identifier; or a port group identifier.

In some embodiments, the first distance is determined based on port information.

In some embodiments, the port information includes: a port identifier, and/or a port group identifier, and in a case where the measurement report includes a port group identifier, the port group identifier has a correspondence relationship with the port identifier, and the correspondence relationship is determined based on a default rule or based on second configuration information, the second configuration information includes: the first configuration information, or configuration information other than the first configuration information.

In some embodiments, the correspondence relationship determined based on the default rule includes at least one of: each port group corresponding to a port group identifier includes N ports with consecutive port identifiers; each port group corresponding to a port group identifier includes N ports with equally spaced port identifiers; or port identifiers included in each of the port groups corresponding to the port group identifiers are determined based on a protocol, where N is an integer greater than or equal to 2.

In some embodiments, the correspondence relationship determined based on the second configuration information includes at least one of: a number of ports included in each port group; or port identifiers of ports included in each port group.

In some embodiments, the measurement report includes at least one of: a non-group based beam measurement report; or a beam-group-based measurement report, in which the group based beam measurement report includes at least one beam group.

In some embodiments, the beam group satisfies at least one of: at least two reference signal resource identifiers in the beam group are different, and at least two port identifiers in the beam group are different; at least two reference signal resource identifiers in the beam group are different, and at least two port group identifiers in the beam group are different; at least two port identifiers in the beam group are different; or at least two port group identifiers in the beam group are different.

In some embodiments, the reference signal resource includes at least one of: CSI-RS; or SSB.

In some embodiments, the TCI configuration information includes at least one of: RRC; MAC CE; or DCI.

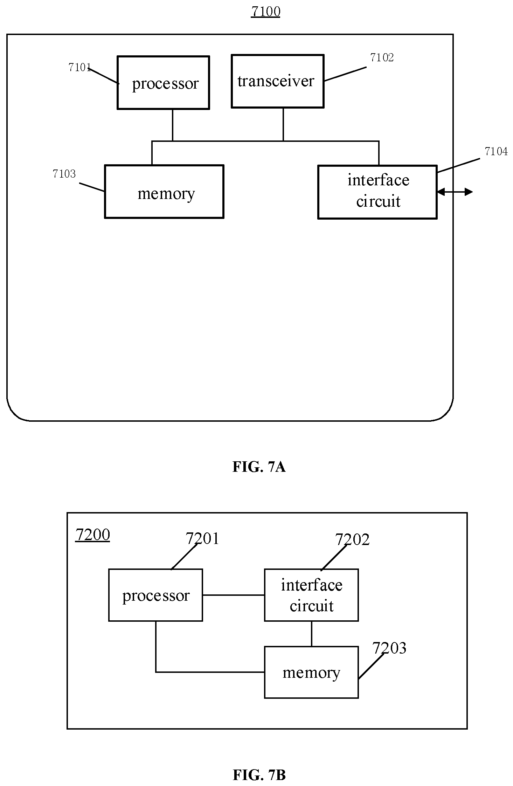

FIG. 7A is a schematic structural diagram of a communication device 7100 according to an embodiment of the present disclosure. The communication device 7100 may be a network device (for example, an access network device, a core network device, and the like), may be a terminal (for example, user equipment, and the like), may be a chip, a chip system, or a processor, and the like that supports a network device in implementing any of the foregoing methods, and may also be a chip, a chip system, or a processor, and the like that supports a terminal in implementing any of the foregoing methods. The communication device 7100 may be used to implement the methods described in the foregoing method embodiments, and for details, reference may be made to the description in the foregoing method embodiments.

As shown in FIG. 7A, the communication device 7100 includes one or more processors 7101. The processor 7101 may be a general-purpose processor or a special-purpose processor, and the like, for example, may be a baseband processor or a central processor. The baseband processor may be used to process a communication protocol and communication data, and the central processor may be used to control a communication apparatus (such as a base station, a baseband chip, a terminal device, a terminal device chip, a DU or a CU, and the like), execute a program, and process data of the program. Optionally, the communication device 7100 is configured to perform any of the foregoing methods. Optionally, the one or more processors 7101 are configured to invoke instructions to cause the communication device 7100 to perform any of the foregoing methods.

In some embodiments, the communication device 7100 further includes one or more transceivers 7102. When the communication device 7100 includes one or more transceivers 7102, the transceiver 7102 performs at least one of the communication steps such as sending and/or receiving in the foregoing methods (for example, step S2101, but not limited thereto), and the processor 7101 performs at least one of the other steps (for example, step S2102, but not limited thereto). In an optional embodiment, the transceiver may include a receiver and/or a transmitter, and the receiver and the transmitter may be separate or integrated together. Optionally, the transceiver, transceiver unit, transceiver machine, transceiver circuit, interface circuit, interface, and the like may be interchanged with one another; the transmitter, transmitting unit, transmitter machine, transmitting circuit, and the like may be interchanged with one another; and the receiver, receiving unit, receiver machine, receiving circuit, and the like may be interchanged with one another.

In some embodiments, the communication device 7100 further includes one or more memories 7103 for storing data. Optionally, all or part of the memory 7103 may also be located outside the communication device 7100. In an optional embodiment, the communication device 7100 may include one or more interface circuits 7104. Optionally, the interface circuit 7104 is connected to the memory 7103, and the interface circuit 7104 may be used to receive data from the memory 7103 or another apparatus, and may be used to send data to the memory 7103 or another apparatus. For example, the interface circuit 7104 may read the data stored in the memory 7103 and send the data to the processor 7101.

The communication device 7100 in the description of the foregoing embodiments may be a network device or a terminal, but the scope of the communication device 7100 described in the present disclosure is not limited thereto, and the structure of the communication device 7100 may not be limited by FIG. 7A. The communication device may be an independent device or may be a part of a larger device. For example, the communication device may be: (1) an independent integrated circuit (IC), or a chip, or a chip system or subsystem; (2) a set having one or more ICs, and optionally, the foregoing IC set may also include a storage component for storing data and programs; (3) an ASIC, such as a modem; (4) a module that can be embedded in another device; (5) a receiver, a terminal device, an intelligent terminal device, a cellular phone, a wireless device, a handset, a mobile unit, an in-vehicle device, a network device, a cloud device, an artificial intelligence device, and so on; (6) others, and so on.

FIG. 7B is a schematic structural diagram of a chip 7200 according to an embodiment of the present disclosure. For the case where the communication device 7100 may be a chip or a chip system, reference may be made to the schematic structural diagram of the chip 7200 shown in FIG. 7B, but this is not limited thereto.

The chip 7200 includes one or more processors 7201. The chip 7200 is configured to perform any of the foregoing methods.

In some embodiments, the chip 7200 further includes one or more interface circuits 7202. Optionally, the interface circuit, interface, transceiver pin, and the like may be interchanged with one another. In some embodiments, the chip 7200 further includes one or more memories 7203 for storing data. Optionally, all or part of the memory 7203 may be located outside the chip 7200. Optionally, the interface circuit 7202 is connected to the memory 7203, the interface circuit 7202 may be used to receive data from the memory 7203 or another apparatus, and the interface circuit 7202 may be used to send data to the memory 7203 or another apparatus. For example, the interface circuit 7202 may read the data stored in the memory 7203 and send the data to the processor 7201.

In some embodiments, the interface circuit 7202 performs at least one of the communication steps such as sending and/or receiving in the foregoing methods (for example, step S2101, but not limited thereto). That the interface circuit 7202 performs the communication steps such as sending and/or receiving in the foregoing methods means, for example: the interface circuit 7202 performs data interaction between the processor 7201, the chip 7200, the memory 7203, or a transceiver device. In some embodiments, the processor 7201 performs at least one of the other steps (for example, step S2102, but not limited thereto).

The respective modules and/or devices described in the embodiments of the virtual apparatus, the physical apparatus, the chip, and the like may be combined or separated arbitrarily depending on the circumstances. Optionally, some or all of the steps may also be performed cooperatively by a plurality of modules and/or devices, which is not limited herein.

The present disclosure further provides a storage medium, the storage medium stores instructions, and when the instructions run on the communication device 7100, the communication device 7100 performs any of the foregoing methods. Optionally, the storage medium is an electronic storage medium. Optionally, the storage medium is a computer-readable storage medium, but is not limited thereto, and may also be a storage medium readable by another apparatus. Optionally, the storage medium may be a non-transitory storage medium, but is not limited thereto, and may also be a transitory storage medium.

The present disclosure further provides a program product, when the program product is executed by the communication device 7100, the communication device 7100 performs any of the foregoing methods. Optionally, the program product is a computer program product.

The present disclosure further provides a computer program, when the computer program runs on a computer, the computer performs any of the foregoing methods.

## Claims

1. A resource configuration method, comprising:
receiving, by a terminal, transmission configuration indicator (TCI) configuration information, wherein the TCI configuration information is used to configure a TCI state, and the TCI state is used to indicate a reference signal resource identifier and port information corresponding to quasi-co-location (QCL).

2. The method according to claim 1, further comprising:
receiving, by the terminal, first configuration information, wherein the first configuration information comprises reference signal resource configuration information, the reference signal resource configuration information is used to configure a reference signal resource, and the reference signal resource corresponds to a plurality of ports;
sending a measurement report to a network device, wherein the measurement report is obtained through measurement based on the reference signal resource,
wherein the measurement report comprises at least one of:
the reference signal resource identifier and the port information;
a quality parameter and the port information; or
the reference signal resource identifier, the quality parameter, and the port information.

3. The method according to claim 1 or 2, wherein the TCI state indicating the reference signal resource identifier and the port information further comprises:
the TCI state indicating a reference signal resource identifier corresponding to a first type of QCL and port information corresponding to the first type of QCL, wherein the first type of QCL represents a spatial reception parameter.

4. The method according to claim 1 or 2, wherein the TCI state indicating the reference signal resource identifier and the port information further comprises:
the TCI state indicating a reference signal resource identifier corresponding to a first type of QCL and port information corresponding to a second type of QCL, wherein the first type of QCL represents a spatial reception parameter, and the second type of QCL is different from the first type of QCL.

5. The method according to claim 4, wherein the second type of QCL represents at least one of:
a first distance;
a port identifier; or
a port group identifier.

6. The method according to claim 2, wherein the port information comprises: a port identifier, and/or a port group identifier, and in a case where the measurement report comprises the port group identifier, the port group identifier has a correspondence relationship with the port identifier, wherein the correspondence relationship is determined based on a default rule or based on second configuration information, and the second configuration information comprises: the first configuration information, or configuration information other than the first configuration information.

7. The method according to claim 6, wherein the correspondence relationship determined based on the default rule comprises at least one of:
each port group corresponding to a port group identifier comprises N ports with consecutive port identifiers;
each port group corresponding to a port group identifier comprises N ports with equally spaced port identifiers; or
port identifiers comprised in each of the port groups corresponding to the port group identifiers are determined based on a protocol,
wherein N is an integer greater than or equal to 2.

8. The method according to claim 6, wherein the correspondence relationship determined based on the second configuration information comprises at least one of:
a number of ports comprised in each port group; or
port identifiers of ports comprised in each port group.

9. The method according to claim 2, wherein the measurement report comprises at least one of:
a non-group based beam measurement report; or
a group based beam measurement report, wherein the group based beam measurement report comprises at least one beam group.

10. The method according to claim 9, wherein the beam group satisfies at least one of:
at least two reference signal resource identifiers in the beam group are different, and at least two port identifiers in the beam group are different;
at least two reference signal resource identifiers in the beam group are different, and at least two port group identifiers in the beam group are different;
at least two port identifiers in the beam group are different; or
at least two port group identifiers in the beam group are different.

11. The method according to any one of claims 2 to 10, wherein the reference signal resource comprises at least one of:
a channel state information-reference signal (CSI-RS); or
a synchronization signal block (SSB).

12. The method according to any one of claims 1 to 11, wherein the TCI configuration information comprises at least one of:
radio resource control (RRC);
a medium access control-control element (MAC CE); or
downlink control information (DCI).

13. The method according to claim 5, wherein the first distance is determined based on the port information.

14. A resource configuration method, comprising:
sending, by a network device, transmission configuration indicator (TCI) configuration information, wherein the TCI configuration information is used to configure a TCI state, and the TCI state is used to indicate a reference signal resource identifier and port information corresponding to quasi-co-location (QCL).

15. The method according to claim 14, further comprising:
sending, by the network device, first configuration information, wherein the first configuration information comprises reference signal resource configuration information, the reference signal resource configuration information is used to configure a reference signal resource, and the reference signal resource corresponds to a plurality of ports;
receiving a measurement report sent by a terminal, wherein the measurement report is obtained through measurement based on the reference signal resource,
wherein the measurement report comprises at least one of:
the reference signal resource identifier and the port information;
a quality parameter and the port information; or
the reference signal resource identifier, a quality parameter, and the port information.

16. The method according to claim 14 or 15, wherein the TCI state indicating the reference signal resource identifier and the port information further comprises:
the TCI state indicating a reference signal resource identifier corresponding to a first type of QCL and port information corresponding to the first type of QCL, wherein the first type of QCL represents a spatial reception parameter.

17. The method according to claim 14 or 15, wherein the TCI state indicating the reference signal resource identifier and the port information further comprises:
the TCI state indicating a reference signal resource identifier corresponding to a first type of QCL and port information corresponding to a second type of QCL, wherein the first type of QCL represents a spatial reception parameter, and the second type of QCL is different from the first type of QCL.

18. The method according to claim 17, wherein the second type of QCL represents at least one of:
a first distance, wherein the first distance is determined based on the port information;
a port identifier; or
a port group identifier.

19. The method according to claim 15, wherein the port information comprises: a port identifier, and/or a port group identifier, and in a case where the measurement report comprises the port group identifier, the port group identifier has a correspondence relationship with the port identifier, wherein the correspondence relationship is determined based on a default rule or based on second configuration information, and the second configuration information comprises: the first configuration information, or configuration information other than the first configuration information.

20. The method according to claim 19, wherein the correspondence relationship determined based on the default rule comprises at least one of:
each port group corresponding to a port group identifier comprises N ports with consecutive port identifiers;
each port group corresponding to a port group identifier comprises N ports with equally spaced port identifiers; or
port identifiers comprised in each of the port groups corresponding to the port group identifiers are determined based on a protocol,
wherein N is an integer greater than or equal to 2.

21. The method according to claim 19, wherein the correspondence relationship determined based on the second configuration information comprises at least one of:
a number of ports comprised in each port group; or
port identifiers of ports comprised in each port group.

22. The method according to claim 15, wherein the measurement report comprises at least one of:
a non-group based beam measurement report; or
a group based beam measurement report, wherein the group based beam measurement report comprises at least one beam group.

23. The method according to claim 22, wherein the beam group satisfies at least one of:
at least two reference signal resource identifiers in the beam group are different, and at least two port identifiers in the beam group are different;
at least two reference signal resource identifiers in the beam group are different, and at least two port group identifiers in the beam group are different;
at least two port identifiers in the beam group are different; or
at least two port group identifiers in the beam group are different.

24. The method according to any one of claims 15 to 22, wherein the reference signal resource comprises at least one of:
a channel state information-reference signal (CSI-RS); or
a synchronization signal block (SSB).

25. The method according to any one of claims 14 to 23, wherein the TCI configuration information comprises at least one of:
radio resource control (RRC);
a medium access control-control element (MAC CE); or
downlink control information (DCI).

26. The method according to claim 18, wherein the first distance is determined based on the port information.

27. A resource configuration method, comprising:
transmitting, by a network device, transmission configuration indicator (TCI) configuration information, wherein the TCI configuration information is used to configure a TCI state, and the TCI state is used to indicate a reference signal resource identifier and port information corresponding to quasi-co-location (QCL); and
receiving, by a terminal, the TCI configuration information.

28. A terminal, comprising:
a transceiver module, configured to receive transmission configuration indicator (TCI) configuration information, wherein the TCI configuration information is used to configure a TCI state, and the TCI state is used to indicate a reference signal resource identifier and port information corresponding to quasi-co-location (QCL).

29. A network device, comprising:
a transceiver module, configured to send transmission configuration indicator (TCI) configuration information, wherein the TCI configuration information is used to configure a TCI state, and the TCI state is used to indicate a reference signal resource identifier and port information corresponding to quasi-co-location (QCL).

30. A terminal, comprising:
one or more processors;
wherein the one or more processors are configured to perform the resource configuration method according to any one of claims 1 to 13.

31. A network device, comprising:
one or more processors;
wherein the one or more processors are configured to perform the resource configuration method according to any one of claims 14 to 26.

32. A communication system, comprising: a terminal and a network device, wherein the terminal is configured to implement the resource configuration method according to any one of claims 1 to 13, and the network device is configured to implement the resource configuration method according to any one of claims 14 to 26.

33. A storage medium, storing instructions thereon, wherein when the instructions are executed on a communication device, the communication device performs the resource configuration method according to any one of claims 1 to 13 or 14 to 26.
